# EUROPÄISCHE PATENTSCHRIFT

(11) **EP 1 965 077 B1**
(45) Veröffentlichungstag und Bekanntmachung des Hinweises auf die Patenterteilung: **06.06.2012**
(21) Anmeldenummer: 07003995.3
(22) Anmeldetag: 27.02.2007
(51) Int. Cl.: F03D 11/04

(54) **Dachgeneratorträger für Windgeneratoren**
Roof generator support for wind generators
Support de générateur de toit pour éolienne

(43) Veröffentlichungstag der Anmeldung: 03.09.2008
(73) Patentinhaber: Engbarth, Hans-Georg, 47608 Geldern (DE); Eyckmann, Heinrich Bartholomäus, 47608 Geldern (DE)
(72) Erfinder: Engbarth, Hans-Georg, 47608 Geldern (DE); Eyckmann, Heinrich Bartholomäus, 47608 Geldern (DE)
(74) Vertreter: Fischer, Uwe

(56) Entgegenhaltungen:
- DE-U1- 9 208 387
- DE-U1- 20 219 274
- DE-U1- 29 714 098
- DE-U1-202004 011 852
- JP-A- 2005 333 744
- JP-A- 2006 348 772
- JP-A- 2007 040 285
- US-A- 4 500 064

## Beschreibung

Die Erfindung bezieht sich auf einen Dachgeneratorträger für einen Windgenerator. Unter Windgeneratoren sind in diesem Zusammenhang alle Einrichtungen zu verstehen, die Windenergie in andere Energieformen wie beispielsweise elektrische Energie oder Wärme umwandeln. Windgeneratoren dieser Art werden umgangssprachlich auch als Windräder bezeichnet.

Ein Dachgeneratorträger mit den Merkmalen gemäß dem Oberbegriff des Anspruchs 1 ist aus der japanischen Offenlegungsschrift JP2006-348772 bekannt. Dieser vorbekannte Dachgeneratorträger hält einen Windgenerator mit einer Mehrzahl an Stützelementen, die zum Teil miteinander und zum Teil mit dem Dach verbunden sind.

Eine andere Haltekonstruktion ist aus der japanischen Offenlegungsschrift JP2005-333744 bekannt. Diese Haltekonstruktion soll die Einwirkung plötzlich auftretender Kräfte, beispielsweise im Falle eines Erdbebens, oder die Einwirkung von Vibrationen auf Gebäude abmildern.

Im Übrigen sind aus den Druckschriften DE 202 19 274 U1 und DE297 14 098 U1 eine Vielzahl unterschiedlicher Konzepte für Antennenhalter bekannt.

Der Erfindung liegt die Aufgabe zugrunde, einen Dachgeneratorträger anzugeben, mit dem sich ein Windgenerator auf einem Dach sicher befestigen lässt, so dass die auftretenden Windlasten aufgenommen werden können. Auch soll der Dachgeneratorträger den während des Betriebs des Windgenerators auftretenden Schwingungsbelastungen standhalten.

Diese Aufgabe wird erfindungsgemäß durch einen Dachgeneratorträger mit den Merkmalen gemäß Anspruch 1 gelöst. Vorteilhafte Ausgestaltungen des erfindungsgemäßen Dachgeneratorträgers sind in Unteransprüchen angegeben.

Ein wesentlicher Vorteil des erfindungsgemäßen Dachgeneratorträgers ist darin zu sehen, dass sich dieser fest und sicher an verschiedenen Arten von Dächern befestigen lässt. Durch die erfindungsgemäß vorgesehenen ineinandergreifenden Rundrohre bzw. durch das erfindungsgemäß vorgesehene Rundrohr mit der in das Rundrohr eingreifenden Stange ist es nämlich möglich, die Montagebasis an Dächern mit beliebigem Dachsparrenabstand sicher zu befestigen; damit einhergehend wird auch das der Montagebasis zugeordnete Stützelement sicher fixiert und der Windgenerator fest und schwingungssicher gehalten.

Durch die "Rundrohrwahl" ist es dabei ebenfalls möglich, das Stützelement in einem beliebigen Winkel an der Montagebasis zu befestigen, weil nämlich keine Vorzugsrichtung durch die Montagebasis definiert wird; das Stützelement kann damit nach oder auch während der Montage an der Montagebasis quasi beliebig ausgerichtet werden, beispielsweise senkrecht zur Horizontalen.

An dem der Montagebasis zugewandten Ende des Stützelements, also an dem anderen Ende des Stützelements, ist ein Klemmelement mittelbar oder unmittelbar angebracht, das mit einem Gegenklemmelement an einem der Rundrohre oder an der Stange der Montagebasis festklemmbar ist. Mit einer solchen Klemmverbindung lässt sich das Stützelement in der Praxis sehr einfach an der zugeordneten Montagebasis montieren.

Das Klemmelement kann mit dem anderen Ende des Stützelements lösbar oder fest verbunden sein, beispielsweise verklebt, verschweißt, verschraubt, vernietet oder verlötet (z. B. hartgelötet).

Vorzugsweise sind das Klemmelement und das Gegenklemmelement derart miteinander verbindbar, dass das Klemmelement und das Gegenklemmelement einen Abschnitt der Montagebasis mittelbar oder unmittelbar zwischen ihren Klemmelementinnenseiten einklemmen. Vorzugsweise ist das Stützelement an einer Klemmelementaußenseite angebracht, beispielsweise verklebt, verschweißt, verschraubt, vernietet oder verlötet (z. B. hartgelötet).

Beispielsweise kann auch ein Zwischenstück - wie beispielsweise eine Klemmplatte, ein Zwischenblech, ein Dichtring oder dergleichen - vorhanden sein, das zwischen dem Klemmelement und dem Rohr bzw. der Stange und/oder zwischen dem Gegenklemmelement und dem Rohr bzw. der Stange eingelegt wird. Ein solches Zwischenstück kann beispielsweise dazu gedacht sein, die Montagebasis zu deformieren, um eine formschlüssige Verbindung zu erreichen; alternativ oder zusätzlich kann es dazu geeignet sein, die Reibung zwischen Klemmelement und Montagebasis bzw. Gegenklemmelement und Montagebasis zu vergrößern, um eine bessere kraftschlüssige Verbindung zu erreichen.

Das Klemmelement und das Gegenklemmelement können auf beliebige Art und Weise miteinander verbunden werden, beispielsweise durch eine Schraubverbindung, eine Klemmverbindung, eine Spanneinrichtung oder eine Schnellspanneinrichtung. Auch können das Klemmelement und das Gegenklemmelement an einer Seite durch ein Gelenk schwenk- oder drehbar verbunden sein und an einer anderen Seite durch eine Schraubverbindung, eine Klemmverbindung, eine Spanneinrichtung oder eine Schnellspanneinrichtung während der Montage des Dachgeneratorträgers am Dach miteinander verbunden werden.

Wie bereits erwähnt, führen das Klemmelement und/oder das Gegenklemmelement vorzugsweise zu einer form- und/oder kraftschlüssigen Verbindung mit dem Rohr oder der Stange der zugeordneten Montagebasis.

Das Klemmelement und/oder das Gegenklemmelement können beliebige Formgestaltungen aufweisen; vorzugsweise werden sie durch Schellen gebildet, beispielsweise in Form von Rundstahlbügeln mit Gegenplatte, gebogenen Gewindestangen mit Gegenplatte, gebogenen Bolzen mit Gegenplatte oder dergleichen. Die Formgestaltung der Klemmelemente und Gegenklemmelemente ist dabei beliebig, solange sie geeignet ist, eine formschlüssige und/oder kraftschlüssige Verbindung mit der zugeordneten Montagebasis zu bilden. Werden als Schellen Rundstahlbügel, gebogene Gewindestangen, gebogene Bolzen oder dergleichen eingesetzt, so werden diese vorzugsweise als Gegenklemmelement (Gegenschelle) verwendet; als zugehöriges Klemmelement wird in diesem Falle beispielsweise eine Schelle in Form einer planen oder gewölbten Platte eingesetzt. Bei einem Einsatz einer Schelle als Klemmelement wird das zugehörige Stützelement an einer Schellenaußenseite der Schelle angebracht.

Eine formschlüssige Verbindung zwischen dem Klemmelement und der Montagebasis und/oder eine formschlüssige Verbindung zwischen dem Gegenklemmelement und der Montagebasis kann auf einer entsprechenden Formgebung des Klemmelements, des Gegenklemmelements und/oder der Montagebasis beruhen, die bereits vor der Montage vorhanden ist. Alternativ kann die formschlüssige Verbindung zwischen dem Klemmelement und der Montagebasis und/oder die formschlüssige Verbindung zwischen dem Gegenklemmelement und der Montagebasis zumindest auch auf einer Deformation beruhen, die erst bei der bestimmungsgemäßen Montage durch eine Deformation des Klemmelements, des Gegenklemmelements oder der Montagebasis hervorgerufen wird.

Vorzugsweise sind das Klemmelement, das Gegenklemmelement, das Rundrohr und/oder die Stange der Montagebasis entsprechend derart dimensioniert, dass bei der bestimmungsgemäßen Montage des Dachgeneratorträgers eine Deformation des Klemmelements, des Gegenklemmelements, des Rohrs und/oder der Stange auftritt und dadurch zumindest auch eine formschlüssige Verbindung gebildet wird.

Besonders bevorzugt bestehen das Klemmelement und/oder das Gegenklemmelement aus einem anderen, und zwar härteren Material als der Abschnitt der Montagebasis, den die Klemmelementinnenseiten einklemmen.

Das Klemmelement, das Gegenklemmelement sowie die Montagebasis können beispielsweise aus Kunststoff, glasfaserverstärktem Kunststoff, Aluminium, Stahl oder Edelstahl bestehen, wobei das Klemmelement und das Gegenklemmelement bevorzugt aus einem härteren Material der genannten Materialgruppe als die Montagebasis bestehen. Besteht das Klemmelement, das Gegenklemmelement sowie die Montagebasis aus Stahl oder Edelstahl, so wird es als vorteilhaft angesehen, wenn das Klemmelement und das Gegenklemmelement eine härtere Stahlsorte als die Montagebasis aufweisen.

Bevorzugt sind das Klemmelement und das Gegenklemmelement sowie das Rundrohr der Montagebasis derart dimensioniert, dass durch eine bestimmungsgemäße Montage des Klemmelements und des Gegenklemmelements an der Montagebasis das eingeklemmte Rundrohr zumindest außenseitig verformt wird.

Weist die Montagebasis ein äußeres Rundrohr - nachfolgend Außenrohr genannt - und ein inneres Rundrohr - nachfolgend Innenrohr genannt- auf, so wird es als vorteilhaft angesehen, wenn der Innendurchmesser des Außenrohres der Montagebasis und der Außendurchmesser des Innenrohres der Montagebasis derart aufeinander abgestimmt sind, dass das Innenrohr im Außenrohr spielfrei, zumindest weitgehend spielfrei, beweglich ist und dass durch ein Verformen der Montagebasis das Innenrohr und das Außenrohr derart miteinander verklemmt werden, dass sie relativ zueinander fixiert werden.

Vorzugsweise weist das Klemmelement oder das Gegenklemmelement Vorsprünge auf, die bei einer Montage des Klemmelements bzw. Gegenklemmelements, beispielsweise beim Anziehen einer das Klemmelement und das Gegenklemmelement verbindenden Schraubverbindung, in die Montagebasis hineingedrückt werden.

Auch kann das Gegenklemmelement eine glatte Klemmelementinnenseite aufweisen, die durch ein Rinnenteil gebildet wird, das durch zumindest zwei U-förmige Halteelemente gehalten wird.

Beispielsweise sind zwei U-förmige Halteelemente an ihren beiden Enden jeweils mit einem Gewinde ausgestattet, an dem zur Bildung einer Schraubverbindung und zur Befestigung der Halteelemente Muttern aufgeschraubt werden.

Ein solches Rinnenteil kann beispielsweise eine Wölbung aufweisen, die an den Außendurchmesser des von dem Klemmelement und dem Gegenklemmelement eingeklemmten Abschnitts der Montagebasis angepasst ist.

Das Klemmelement kann im Übrigen auch durch ein U-Profil gebildet sein, wobei die Seitenwände des U-Profils vorzugsweise zwei einander gegenüber liegende Aussparungen zur Aufnahme der Montagebasis aufweisen.

### Bevorzugte Ausgestaltungen der Stützelemente:

Vorzugsweise ist jedes der Stützelemente des Dachgeneratorträgers mittels einer Montagebasis mittelbar am Dach befestigbar. Dabei kann beispielsweise jedes Stützelement mittels einer individuellen Montagebasis mittelbar am Dach befestigbar sein; alternativ kann auch vorgesehen sein, dass sich zwei oder mehr Stützelemente ein und dieselbe Montagebasis teilen, also an ein und derselben Montagebasis befestigt werden.

Vorzugsweise sind die Stützelemente jeweils mit ihrem einen Ende an dem Trägerelement und mit ihrem anderen Ende mittels Montagebasis mittelbar am Dach befestigbar.

Die Stützelemente können beispielsweise durch Stangen oder Rohre, insbesondere solche mit einem runden, ovalen oder eckigen (z. B. quadratischen, rechteckigen, vieleckigen) Querschnitt, durch U-Profile, durch Winkelprofile oder durch Lochschienen gebildet sein.

Besonders bevorzugt sind die Stützelemente in der Länge stufenlos verstellbar. Beispielsweise weist zumindest ein Stützelement zwei ineinandergreifende Rohre - nachfolgend zur Klarstellung und sprachlichen Trennung von den Rundrohren der Montagebasen "Stützrohre" genannt - oder ein Rohr und eine darin eingreifende Stange - nachfolgend zur Klarstellung und sprachlichen Trennung von den Stangen der Montagebasen "Stützstange" genannt - auf. Die Stützrohre und Stützstangen können einen beliebigen Querschnitt aufweisen, beispielsweise einen runden, ovalen oder eckigen (z. B. quadratischen, rechteckigen, vieleckigen) Querschnitt.

Bevorzugt weist der Dachgeneratorträger zwei bis acht Stützelemente auf, die jeweils mit ihrem einen Ende an dem Trägerelement und mit ihrem anderen Ende mittelbar oder unmittelbar am Dach befestigbar sind.

### Bevorzugte Ausgestaltungen der Montagebasis bzw. der Montagebasen:

Als bevorzugt wird es außerdem angesehen, wenn zumindest zwei Montagebasen durch ein Verbindungsteil unter Bildung eines Montagebasenpaares derart miteinander verbunden sind, dass das Montagebasenpaar an und/oder auf drei unmittelbar nebeneinander angeordneten Dachlatten oder Dachsparren anbringbar ist. Eine solche Doppelanordnung von Montagebasen erhöht die Stabilität des Dachgeneratorträgers auf dem Dach erheblich, weil drei benachbarte Dachsparren mechanisch zusammenwirken. Auch können mehr als zwei Montagebasen durch Verbindungsteile verbunden sein und eine Art Montagebasenkette bilden, die sich auf beliebig vielen Dachsparren, beispielsweise auf vier und mehr Dachsparren, befestigen lässt: Beispielsweise können so viele Montagebasen durch Verbindungsteile verbunden werden, dass die Länge der Montagebasenkette der Dachbreite entspricht, so dass sich die Montagebasenkette von einem Dachende zum anderen Dachende hin erstreckt.

Vorzugsweise sind die Rundrohre bzw. das Rundrohr und die Stange der Montagebasen teleskopartig ineinanderschiebbar, um die Länge der Montagebasen an den Abstand der Dachsparren besonders einfach anpassen zu können. Alternativ können die Rundrohre bzw. das Rundrohr und die Stange der Montagebasen zumindest partiell ineinanderschraubbar sein.

### Bevorzugte Ausgestaltungen der Befestigungselemente:

Zur Befestigung der Montagebasis bzw. der Montagebasen ist bevorzugt mit einem freien Ende der Rundrohre bzw. Stangen der Montagebasen jeweils ein Befestigungselement verklebt, verschweißt, verschraubt, vernietet oder verlötet.

Zumindest eines der Befestigungselemente weist vorzugsweise ein Flacheisen, ein Winkelprofil, ein T-Profil, ein H-Profil oder eine sonstige Profilform auf. Bevorzugt ist zumindest eines der Befestigungselemente dadurch mit dem zugeordneten Rundrohr der Montagebasis verbunden, dass dieses mit einem plattenförmigen Abschnitt in einen Schlitz am Ende des jeweiligen Rundrohres eingeschoben und darin fixiert (z. B. verklebt, verschweißt, verschraubt, vernietet oder verlötet) ist.

Die Befestigungselemente weisen bevorzugt Bohrungen auf, die in Längsrichtung des jeweiligen Befestigungselements mit Abstand zueinander angeordnet sind und die quer zur Längsrichtung des jeweiligen Befestigungselements räumlich versetzt angeordnet sind.

Die Montagebasis ist bevorzugt an jedem der Befestigungselemente - bezogen auf die Längsachse des jeweiligen Befestigungselements - jeweils asymmetrisch bzw. versetzt angeordnet. Unter einer asymmetrischen bzw. versetzten Anordnung ist dabei beispielsweise zu verstehen, dass die Befestigungsstelle, an der die Montagebasis an dem jeweiligen Befestigungselement angeordnet ist, bezogen auf den Mittelpunkt des jeweiligen Befestigungselements - in Richtung der Längsachse gesehen - versetzt ist. Ein Vorteil dieser Ausgestaltung ist darin zu sehen, dass die Montagebasis auch bei Spitzdächern, die sehr spitz nach oben zulaufen und somit einen sehr großen Anstiegswinkel aufweisen, eingesetzt werden kann. Problematisch bei der Montage auf Spitzdächern kann nämlich sein, dass sich im Falle eines sehr großen Anstiegswinkels des Spitzdaches das Stützelement unter Umständen nicht in eine vertikale Lage schwenken lässt, nachdem es an der Montagebasis montiert ist, weil das Stützelement vor Erreichen seiner vertikalen Stellung an die "über ihm befindliche", "obere" Dachlatte anstößt; Dachlatten dienen zur Auflage von Dachziegeln und sind quer verlaufend auf den Dachsparren bzw. auf einer Konterlattung der Dachsparren angebracht. An dieser Stelle setzt die hier beschriebene bevorzugte Ausgestaltung an, indem vorgesehen wird, einen größeren Abstand der Montagebasis von der jeweils "oberen" Dachlatte zu ermöglichen, ohne dass dadurch sonstige Nachteile für die Befestigung hingenommen werden müssen; hierzu ist konkret vorgesehen, von einer symmetrischen Anordnung der Befestigungselemente an der Montagebasis abzurücken und stattdessen eine asymmetrische Anordnung vorzusehen. Eine asymmetrische Anordnung ermöglicht es nämlich, den Abstand der Montagebasis von der oberen Dachlatte größer einzustellen, als dies möglich ist, wenn die Befestigungselemente - bei identischer Länge und identischer Haltekraft am Dachsparren - symmetrisch an der Montagebasis angebracht sind. Die Montagebasis lässt sich dadurch nämlich derart am Dach montieren, dass der kürzere Befestigungsabschnitt des Befestigungselements der "unteren" Dachlatte und der längere Befestigungsabschnitt der oberen Dachlatte zugewandt ist, wodurch bei einer Montage im Bereich oder unmittelbar an der unteren Dachlatte ein maximaler Abstand zwischen der montierten Montagebasis und der oberen Dachlatte erreicht wird.

Bevorzugt ist jedes der Befestigungselemente - bezogen auf den Mittelpunkt des jeweiligen Befestigungselements in Richtung der Längsachse gesehen - um zumindest 10 % der Länge des Befestigungselementes in Längsrichtung versetzt. Beispielsweise ist die Befestigungsstelle um zumindest 20 % der Länge des Befestigungselementes in Längsrichtung versetzt.

Die Länge eines Befestigungselementes kann beispielsweise zwischen 10 und 20 cm, vorzugsweise bei 15 cm, liegen und der Versatz der Befestigungsstelle kann beispielsweise zwischen 1,5 cm und 2,5 cm, vorzugsweise bei 2,0 cm, liegen.

### Bevorzugte Ausgestaltungen des Trägerelements des Dachgeneratorträgers:

Vorzugsweise ist das Trägerelement des Dachgeneratorträgers in der Größe verstellbar ausgeführt, damit eine ideale Anpassung an die jeweilige Form und Bauweise des Daches sowie an den jeweiligen Windgenerator erfolgen kann.

Beispielsweise ist das Trägerelement durch einen Rahmen gebildet, der den Windgenerator trägt. Ein solcher Rahmen kann beispielsweise zumindest eine Stange - nachfolgend Rahmenstange genannt - oder ein Rohr - nachfolgend Rahmenrohr genannt -, insbesondere solche mit einem runden, ovalen oder eckigen (quadratischen, rechteckigen) Querschnitt, oder ein U-Profil, ein Winkelprofil oder eine Lochschiene aufweisen oder durch ein oder mehrere derartige Teile gebildet sein. Zum Beispiel kann der Rahmen wenigstens zwei ineinandergreifende Rahmenrohre oder ein Rahmenrohr und eine in das Rahmenrohr eingreifende Rahmenstange umfassen, damit eine stufenlose Längenverstellung der Rahmengröße möglich ist.

### Bevorzugte Ausführungen im Hinblick auf die Platzierung des Dachgeneratorträgers:

Im Hinblick auf einen maximalen Wirkungsgrad des Windgenerators wird es als vorteilhaft angesehen, wenn der Dachgeneratorträger zur Montage des Generators oberhalb des Dachfirstes vorgesehen ist.

Im Hinblick auf möglichst große Haltekräfte wird es als vorteilhaft angesehen, wenn zumindest ein Stützelement auf der einen Dachseite und zumindest ein Stützelement auf der anderen Dachseite anbringbar ist. Vorzugsweise weisen alle Stützelemente zumindest annähernd die gleiche Länge auf und sind - wie oben bereits erwähnt - bevorzugt längenverstellbar.

Alternativ kann der Dachgeneratorträger auch zur Montage des Generators unterhalb des Dachfirstes geeignet sein. In diesem Falle ist der Dachgeneratorträger vorzugsweise auf einer einzigen Dachseite vorgesehen. Beispielsweise sind zumindest zwei der Stützelemente unterschiedlich lang, wobei das kürzere Stützelement zur Dachmontage räumlich oberhalb des längeren Stützelements bestimmt ist. Alternativ können die Stützelemente auch auf derselben Dachhöhe angebracht werden.

Unabhängig vom Montageort auf dem Dach sind vorzugsweise mindestens drei oder vier Stützelemente vorhanden, von denen zumindest zwei annähernd gleich lang sind und ein Stützelementpaar bilden.

Bevorzugt sind zumindest zwei solcher Stützelementpaare vorhanden, von denen eines kürzere Stützelemente aufweist als das andere und wobei das Stützelementpaar mit den kürzeren Stützelementen zur Dachmontage räumlich oberhalb des Stützelementpaars mit den längeren Stützelementen bestimmt ist.

Die Erfindung bezieht sich im Übrigen auch auf eine montierte Anordnung mit einem Dachgeneratorträger und einem darauf montierten Windgenerator wie er oben beschrieben ist.

Die Erfindung wird nachfolgend anhand von Ausführungsbeispielen näher beschrieben; dabei zeigen beispielhaft:
- Figur 1: ein erstes Ausführungsbeispiel für einen erfindungsgemäßen Dachgeneratorträger mit vier Stützelementen nach einer Montage oberhalb des Dachfirstes,
- Figur 2: ein zweites Ausführungsbeispiel für einen erfindungsgemäßen Dachgeneratorträger mit zwei Stützelementen nach einer Montage oberhalb des Dachfirstes,
- Figur 3: ein drittes Ausführungsbeispiel für einen erfindungsgemäßen Dachgeneratorträger mit drei Stützelementen nach einer Montage oberhalb des Dachfirstes,

- Figur 4: ein viertes Ausführungsbeispiel für einen erfindungsgemäßen Dachgeneratorträger mit vier Stützelementen nach einer Montage auf einer einzigen Dachseite,
- Figur 5: ein fünftes Ausführungsbeispiel für einen erfindungsgemäßen Dachgeneratorträger mit drei Stützelementen nach einer Montage auf einer einzigen Dachseite,
- Figur 6: ein sechstes Ausführungsbeispiel für einen erfindungsgemäßen Dachgeneratorträger mit zwei Stützelementen nach einer Montage auf einer einzigen Dachseite,
- Figur 7: schematisch ein Ausführungsbeispiel für eine Montagebasis für den Dachgeneratorträger gemäß den Figuren 1 bis 6,
- Figur 8: schematisch die Montagebasis gemäß Figur 7 nach einer Montage auf einem Dach,
- Figur 9: ein Ausführungsbeispiel für ein Klemmelement im Längsschnitt,
- Figur 10: das Klemmelement gemäß Figur 9 im Querschnitt,
- Figur 11: das Klemmelement gemäß den Figuren 9 und 10 in einer dreidimensionalen Darstellung,
- Figur 12: ein Ausführungsbeispiel für ein Gegenklemmelement in einer Sicht von oben,
- Figur 13: das Gegenklemmelement gemäß Figur 12 im Querschnitt,
- Figur 14: das Gegenklemmelement gemäß den Figuren 12 und 13 in einer dreidimensionalen Darstellung,
- Figur 15: ein Außenrohr und ein Innenrohr der Montagebasis gemäß Figur 7 im Querschnitt, bevor das Klemmelement gemäß den Figuren 9 bis 11 mit dem Gegenklemmelement gemäß den Figuren 12 bis 14 aufgeschraubt ist,
- Figur 16: die beiden Rohre gemäß Figur 15 nach einem Festziehen des Klemmelements und des Gegenklemmelements und einer damit einhergehenden Deformation des Außenrohres,
- Figuren 17 und 18: ein weiteres Ausführungsbeispiel für eine Art der Verbindung zwischen Montagebasis und Befestigungselement und
- Figuren 19 und 20: ein weiteres Ausführungsbeispiel für eine Klemmelement/Gegenklemmelement-Verbindung.

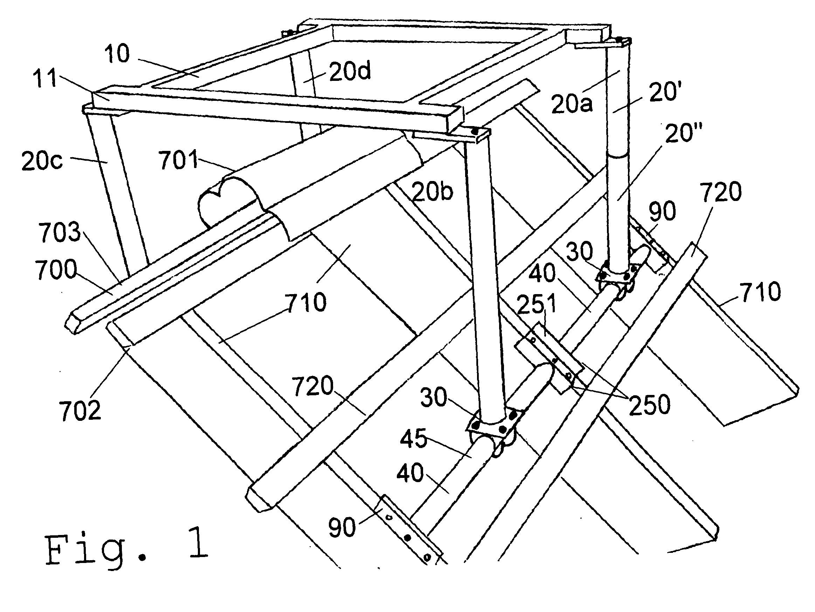

In den Figuren 1 bis 20 werden zur besseren Übersicht für identische oder vergleichbare Komponenten dieselben Bezugszeichen verwendet.

In der Figur 1 ist ein erstes Ausführungsbeispiel für einen Dachgeneratorträger dargestellt; dieser ist mit dem Bezugszeichen 10 gekennzeichnet. Der Dachgeneratorträger dient zum Tragen eines in der Figur 1 nicht weiter dargestellten Windgenerators.

Der Dachgeneratorträger 10 ist mit einem Trägerelement 11 ausgestattet, auf dem sich der Windgenerator befestigen lässt. Bei dem Ausführungsbeispiel gemäß der Figur 1 ist das Trägerelement 11 durch einen festen Rahmen gebildet, der auf vier Stützelementen 20a, 20b, 20c und 20d montiert, beispielsweise verklebt, verschweißt, verschraubt, vernietet oder verlötet ist.

Die Stützelemente 20a-20d sind vorzugsweise höhenverstellbar. Beispielsweise weisen sie jeweils zwei Stützrohre 20' und 20" auf, die zur Größenverstellung ineinander eingreifen; dies ist jedoch aus Gründen der Übersicht in der Figur 1 nur schematisch angedeutet.

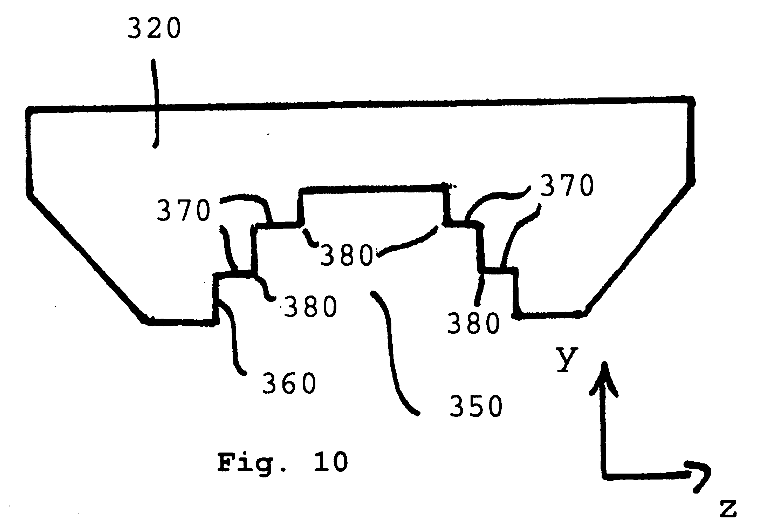

Der Dachgeneratorträger 10 ist oberhalb des Dachfirstes 701 eines Daches 700 montiert. Hierzu sind zwei Stützelemente 20a und 20b auf der einen Dachseite 702 und zwei Stützelemente 20c und 20d auf der durch den Dachfirst 701 von der einen Dachseite 702 getrennten anderen Dachseite 703 angeordnet. Von dem Dach 700 erkennt man in der Figur 10 im Übrigen noch Dachsparren 710 und Dachlatten 720.

Insgesamt weist der Dachgeneratorträger 10 vier Haltemittel 30 auf, mit denen die Stützelemente 20 jeweils an einer individuell zugeordneten Montagebasis 40 befestigt sind. Die Haltemittel sind - wie weiter unten im Detail beschrieben wird - derart ausgestaltet, dass sie an einer beliebigen Stelle der jeweiligen Montagebasis - in Längsrichtung der Montagebasis gesehen - befestigt werden können.

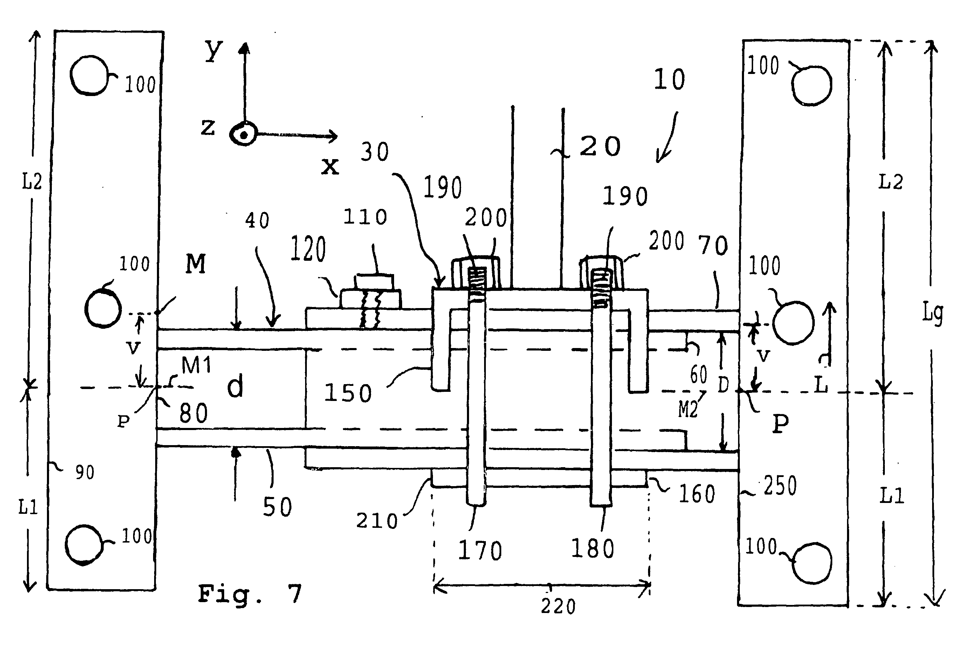

Insgesamt sind also vier Montagebasen 40 vorhanden, von denen zwei auf der einen Dachseite 702 und zwei auf der anderen Dachseite 703 angeordnet sind. Die Montagebasen sind jeweils an den Dachsparren 710 befestigt; hierzu können sie jeweils ein Befestigungselement 90 und ein weiteres Befestigungselement 250 aufweisen. Der Aufbau der Montagebasen wird beispielhaft weiter unten im Zusammenhang mit den Figuren 7-17 erläutert.

Die an bzw. auf demselben Dachsparren aufliegenden Befestigungselemente 250 zweier benachbarter Montagebasen können beispielsweise, wie dies in der Figur 1 gezeigt ist, miteinander verbunden sein oder durch ein Verbindungsteil 251 gebildet sein. Durch ein solches, beispielsweise einteiliges, Verbindungsteil 251 werden die zwei benachbarten Montagebasen 40 unter Bildung eines Montagebasenpaares 45 derart miteinander verbunden, dass das Montagebasenpaar 45 an bzw. auf drei unmittelbar nebeneinander, angeordneten Dachlatten oder Dachsparren befestigt wird. Durch das Verbindungsteil 251 wird die Stabilität des Dachgeneratorträgers 10 deutlich erhöht; außerdem wird die Montage des Dachgeneratorträgers 10 erleichtert.

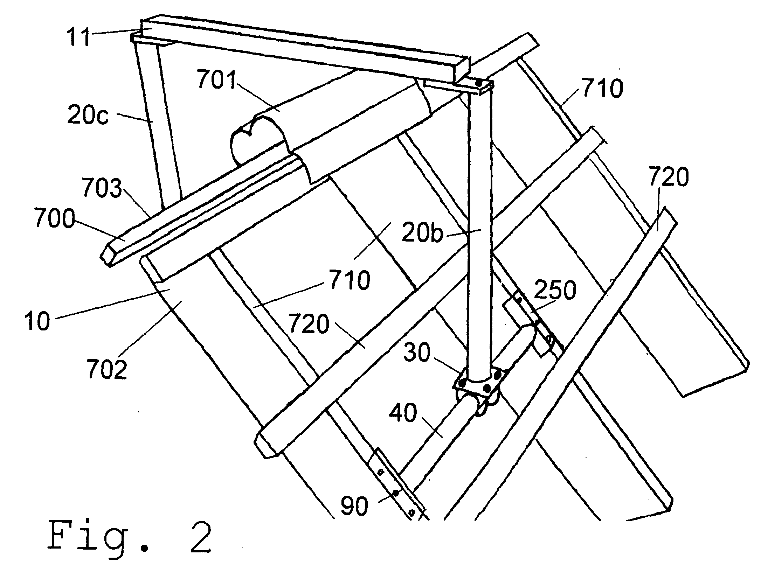

In der Figur 2 ist ein zweites Ausführungsbeispiel für einen Dachgeneratorträger 10 dargestellt. Bei dem Ausführungsbeispiel gemäß der Figur 2 ist das Trägerelement 11 an nur zwei Stützelementen 20b und 20c angebracht, beispielsweise verklebt, verschweißt, verschraubt, vernietet oder verlötet.

Der Dachgeneratorträger 10 ist ebenfalls oberhalb des Dachfirstes 701 des Daches 700 montiert. Hierzu ist das Stützelement 20b auf der einen Dachseite 702 und das Stützelement 20c auf der anderen Dachseite 703 angeordnet.

Insgesamt weist der Dachgeneratorträger 10 somit nur zwei Montagebasen 40 auf, deren Aufbau beispielhaft weiter unten im Zusammenhang mit den Figuren 7-17 erläutert wird. Das Trägerelement 11 kann beispielsweise durch eine Stange oder ein Rohr gebildet sein.

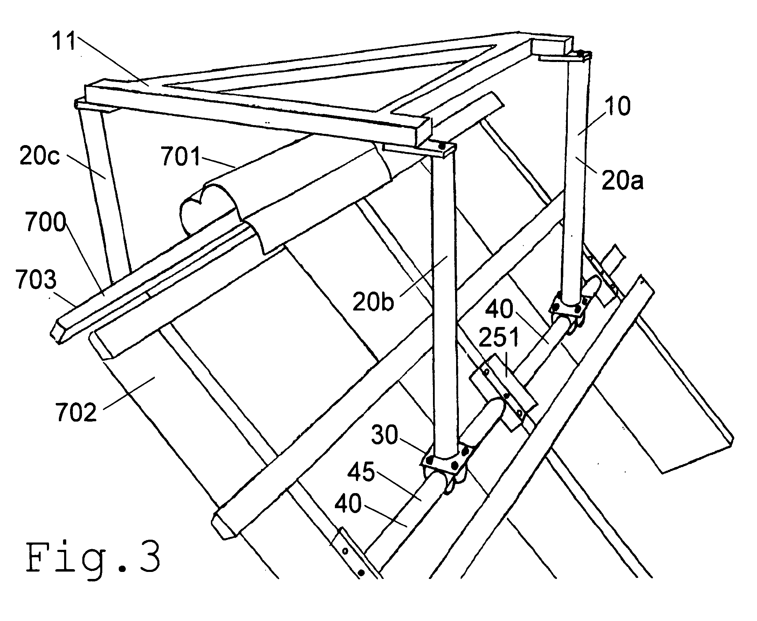

In der Figur 3 ist ein drittes Ausführungsbeispiel für einen Dachgeneratorträger 10 dargestellt. Bei dem Ausführungsbeispiel gemäß der Figur 3 ist das Trägerelement 11 an drei Stützelementen 20a, 20b und 20c angebracht, beispielsweise verklebt, verschweißt, verschraubt, vernietet oder verlötet.

Der Dachgeneratorträger 10 ist oberhalb des Dachfirstes 701 des Daches 700 montiert. Hierzu sind zwei Stützelemente 20a und 20b auf der einen Dachseite 702 und ein Stützelement 20c auf der anderen Dachseite 703 angeordnet. Ein beispielsweise dreieckiges Trägerelement 11, das zum Beispiel durch einen dreieckförmigen Rahmen gebildet sein kann, verbindet die drei Stützelemente 20a, 20b und 20c.

Insgesamt weist der Dachgeneratorträger 10 somit drei Montagebasen 40 auf, deren Aufbau beispielhaft weiter unten im Zusammenhang mit den Figuren 7-17 erläutert wird. Die beiden benachbarten Montagebasen 40 können wieder ein Montagebasenpaar 45 bilden, wenn ein entsprechendes Verbindungsteil 251 verwendet wird.

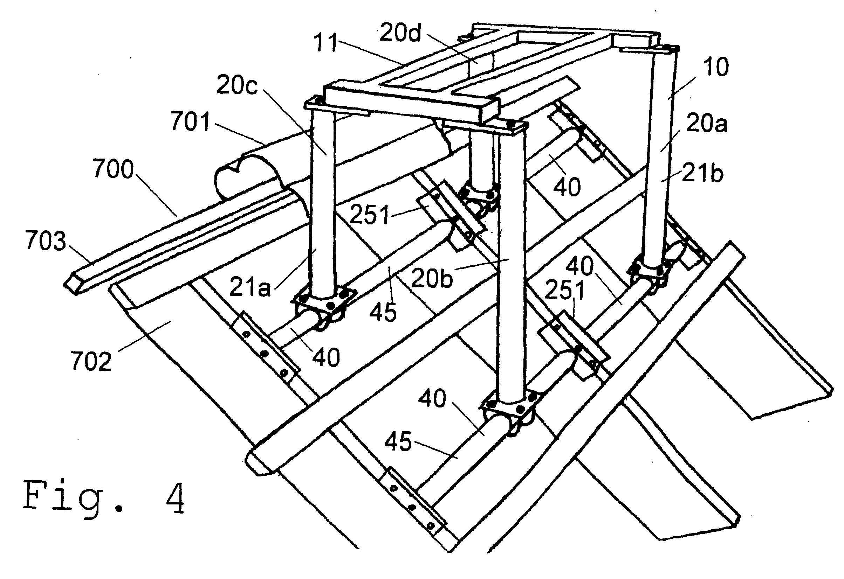

In der Figur 4 ist ein viertes Ausführungsbeispiel für einen Dachgeneratorträger 10 dargestellt. Bei dem Ausführungsbeispiel gemäß der Figur 4 ist der Dachgeneratorträger 10 auf einer einzigen Dachseite, hier der Dachseite 702, montiert. Es sind vier Stützelemente vorhanden, die paarweise zumindest annähernd gleich lang sind. Das durch die beiden Stützelemente 20c und 20d gebildete kürzere Stützelementpaar 21a ist räumlich oberhalb des längeren Stützelementpaars 21b, das durch die Stützelemente 20a und 20b gebildet ist, montiert.

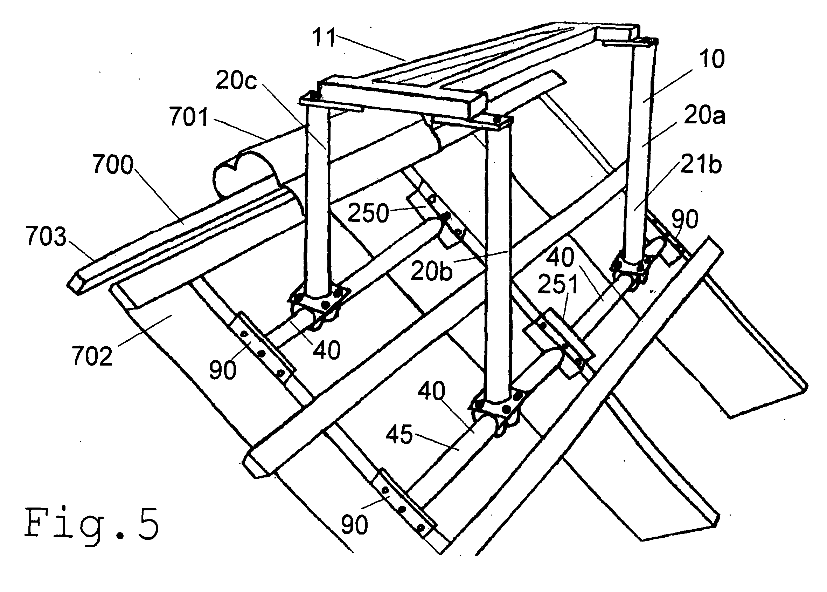

In der Figur 5 ist ein fünftes Ausführungsbeispiel für einen Dachgeneratorträger 10 dargestellt. Bei dem Ausführungsbeispiel gemäß der Figur 5 ist der Dachgeneratorträger 10 auf einer einzigen Dachseite, hier der Dachseite 702, montiert. Es sind drei Stützelemente vorhanden, von denen zwei - vgl. Bezugszeichen 20a und 20b - zumindest annähernd gleich lang sind und ein Stützelementpaar 21b bilden. Ein beispielsweise dreieckiges Trägerelement 11, das beispielsweise durch einen dreieckförmigen Rahmen gebildet sein kann, verbindet die drei Stützelemente 20a, 20b und 20c.

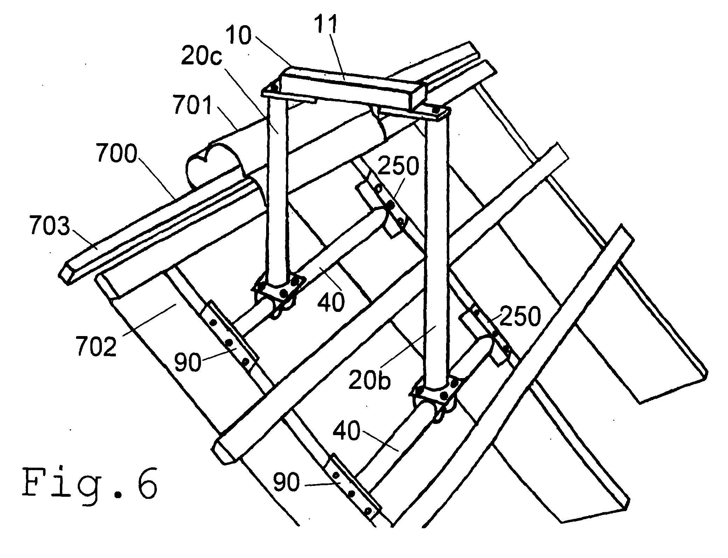

In der Figur 6 ist ein sechstes Ausführungsbeispiel für einen Dachgeneratorträger 10 dargestellt. Bei dem Ausführungsbeispiel gemäß der Figur 6 ist der Dachgeneratorträger 10 auf einer einzigen Dachseite, hier der Dachseite 702, montiert. Es sind zwei ungleich lange Stützelemente 20b und 20c vorhanden, wobei das kürzere räumlich oberhalb des längeren Stützelements montiert ist. Das Trägerelement 11 kann beispielsweise durch eine Stange oder ein Rohr gebildet sein.

Im Zusammenhang mit den Figuren 1 bis 6 sei ergänzend erwähnt, dass die Anbindung der Stützelemente an das Trägerelement 11 auch mittels einer Klemmverbindung erfolgen kann, bei der ein Klemmelement und ein Gegenklemmelement einen Abschnitt des Trägerelements 11 mittelbar oder unmittelbar zwischen ihren Klemmelementinnenseiten umfassen bzw. einklemmen. Die Stützelemente können hierzu an einer Klemmelementaußenseite des Klemmelements oder des Gegenklemmelements angebracht sein, beispielsweise verklebt, verschweißt, verschraubt, vernietet oder verlötet.

Im Zusammenhang mit den Figuren 1 bis 6 sei außerdem erwähnt, dass das Trägerelement 11 größenverstellbar sein kann und beispielsweise wenigstens zwei ineinandergreifende Rahmenrohre oder ein Rahmenrohr und eine in das Rahmenrohr eingreifende Rahmenstange umfassen kann. An einem solchen Rahmenrohr oder an einer solchen Rahmenstange können die Stützelemente beispielsweise mit der beschriebenen Klemmverbindung mit Klemmelement und Gegenklemmelement befestigt werden.

In der Figur 7 ist ein Ausführungsbeispiel für eine Montagebasis 40 des Dachgeneratorträgers 10 - zur besseren Übersicht nicht maßstabgetreu - dargestellt. Man erkennt ein Stützelement 20, das mittels Haltemitteln 30 an der Montagebasis 40 des Dachgeneratorträgers 10 befestigt ist.

Für die nachfolgenden Erläuterungen wird beispielhaft davon ausgegangen, dass sich die Längsrichtung des Stützelementes 20 entlang der Y-Richtung erstreckt und die Montagebasis 40 bezüglich ihrer Längsrichtung in X-Richtung orientiert ist. Erwähnt sei in diesem Zusammenhang, dass das Stützelement 20 über die Haltemittel 30 schwenkbar an der Montagebasis befestigt ist, so dass er in der durch die Y- und Z-Richtung aufgespannten Ebene gegenüber der Montagebasis 40 verschwenkt werden kann.

In der Figur 7 erkennt man, dass die Montagebasis 40 ein Innenrohr 50 aufweist, das mit seinem in der Figur 7 rechten Ende 60 in ein Außenrohr 70 der Montagebasis 40 eingeschoben ist. Ein in der Figur 7 linkes Ende 80 des Innenrohres 50 ist an einem Befestigungselement 90 beispielsweise in Form eines Winkel- oder T-Profiles befestigt. Das Befestigungselement 90 weist Löcher 100 auf, mit denen das Befestigungselement 90 an einem Dachsparren eines Daches verschraubt werden kann. Die Löcher 100 des Befestigungselementes 90 sind in X-Richtung versetzt angeordnet, um zu vermeiden, dass bei einem Festschrauben des Befestigungselementes 90 auf einem Holz-Dachsparren eine Spaltung des Dachsparrens auftreten kann. Die Anordnung der Löcher 100 in dem Befestigungselement 90 ist vorzugsweise symmetrisch zur Mitte M des Befestigungselementes 90.

In der Figur 7 ist darüber hinaus erkennbar, dass der Außendurchmesser d des Innenraums 50 sehr genau an den Innendurchmesser D des Außenrohres 70 angepasst ist; aufgrund dieser Anpassung der beiden Durchmesser d und D wird erreicht, dass das Innenrohr 50 weitgehend spielfrei und "klapperfrei" im Außenrohr 70 verschoben werden kann. Die relative Lage des Innenrohres 50 im Außenrohr 70 wird durch eine Fixierschraube 110 festgelegt, die mittels eines Gewindes 120 im Außenrohr 70 verschraubt wird, wodurch eine Festlegung bzw. Fixierung der Lage des Innenrohres 50 innerhalb des Außenrohres 70 erreicht wird.

In der Figur 7 erkennt man darüber hinaus den Aufbau der Haltemittel 30 in einer seitlichen Sicht. Man sieht, dass die Haltemittel 30 ein Klemmelement in Form einer Schelle 150 aufweisen, die mit einem Gegenklemmelement in Form einer Gegenschelle 160 zusammenwirkt. Konkret weist die Gegenschelle 160 zwei Halteelemente 170 und 180 auf, die jeweils mit Gewinden 190 ausgestattet sind und mittels Muttern 200 an der Schelle 150 festgeschraubt werden. Die Gegenschelle 160 weist darüber hinaus ein Rinnenteil 210 auf, das nach einem Festschrauben der beiden Halteelemente 170 und 180 an der Schelle 150 an einem Abschnitt 220 des Außenrohres 70 außenwandseitig anliegt.

In der Figur 7 lässt sich darüber hinaus ein weiteres Befestigungselement 250 erkennen, das am Außenrohr 70 angebracht, beispielsweise verschweißt, ist. Bei dem weiteren Befestigungselement 250 handelt es sich vorzugsweise ebenfalls um ein T- oder Winkel-Profil wie beim Befestigungselement 90. Das weitere Befestigungselement 250 ist ebenfalls mit Löchern 100 ausgestattet, die ein Festschrauben des weiteren Befestigungselements 250 an einem Dachsparren ermöglichen. Die Anordnung der Löcher 100 in dem weiteren Befestigungselement 250 ist vorzugsweise symmetrisch zur Mitte M des Befestigungselementes 250 in Längsrichtung L. Sollen zwei Montagebasen miteinander verbunden werden, um ein Montagebasenpaar 45 zu bilden, so wird als Befestigungselement 250 ein Verbindungsteil 251 verwendet, wie dies in den Figuren 1 und 2 sowie 4 und 5 gezeigt ist.

In der Figur 7 ist erkennbar, dass das Innenrohr 50 sowie das Außenrohr 70 an den beiden Befestigungselementen 90 und 250 versetzt angebracht sind. So fluchtet die Mittelachse M1 des Innenrohres 50 nicht mit der Mitte M des Befestigungselementes 90 in Längsrichtung L, sondern ist um einen Versatz V versetzt. In entsprechender Weise ist die Mittelachse M2 des Außenrohres 70 um einen Versatz V relativ zur Mitte M des Befestigungselements 250 - in Längsrichtung L gesehen - versetzt. Durch den Versatz V werden jeweils ein kürzerer Befestigungsabschnitt L1 und ein längerer Befestigungsabschnitt L2 gebildet. Die Befestigungsstelle P - dies ist hier der Mittelpunkt des Abschnitts, an dem die beiden Rohre 50 und 70 jeweils an ihrem Befestigungselement angebracht sind - weist also jeweils einen Abstand zur Mitte M des Befestigungselementes auf, der dem Versatz V entspricht.

Vorzugsweise liegt die Gesamtlänge Lg (Lg = L1 + L2) der beiden Befestigungselemente 90 und 250 im Bereich zwischen 10 cm und 20 cm, beispielsweise bei 15 cm. Der Versatz V liegt bevorzugt in einem Bereich zwischen 1 cm und 3 cm, beispielsweise bei ca. V = 2 cm oder bei ca. 10 % der Gesamtlänge Lg.

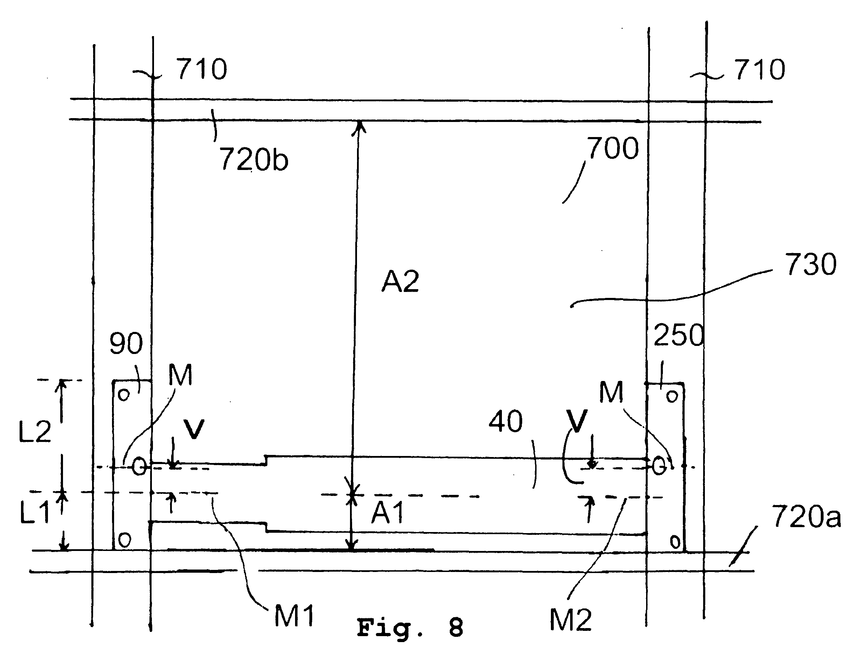

In der Figur 8 ist die Montagebasis 40 des Dachgeneratorträgers 10 in einer Sicht von vorn gezeigt, nachdem sie auf einem Spitzdach 700 montiert worden ist. Man sieht Dachsparren 710, die unter dem Neigungswinkel des Daches schräg nach unten bzw. oben verlaufen sowie Dachlatten 720, die auf den Dachsparren 710 verschraubt sind und quer zu den Dachsparren und somit horizontal verlaufen. In einem Zwischenbereich 730 ist die Montagebasis 40 auf den Dachsparren 710 aufgeschraubt. Man sieht, dass die Montagebasis 40 derart montiert ist, dass der kürzere Befestigungsabschnitt L1 der unteren Dachlatte 720a zugewandt ist. Der längere Befestigungsabschnitt L2 ist der oberen Dachlatte 720b zugewandt. Aufgrund der Zuordnung des kürzeren Befestigungsabschnitts L1 zur unteren Dachlatte 720a lässt sich der Abstand A1 der Montagebasis zur unteren Dachlatte 720a sehr klein wählen, so dass ein maximaler Abstand A2 zwischen der Montagebasis und der oberen Dachlatte 720b erreicht wird; konkret ist ein um den Versatz V größerer Abstand A2 möglich, als wenn die beiden Rohre 50 und 70 mittig an ihren beiden Befestigungselementen 90 und 250 angebracht wären. Aufgrund der von der oberen Dachlatte 720b entfernten Anordnung der Montagebasis ist es möglich, auch bei sehr spitzen Dächern das an der Montagebasis zu befestigenden Stützelement 20 (vgl. Figur 1) in eine vertikale Position zu schwenken, ohne dass das Stützelement 20 vorher gegen die obere Dachlatte 720b stößt.

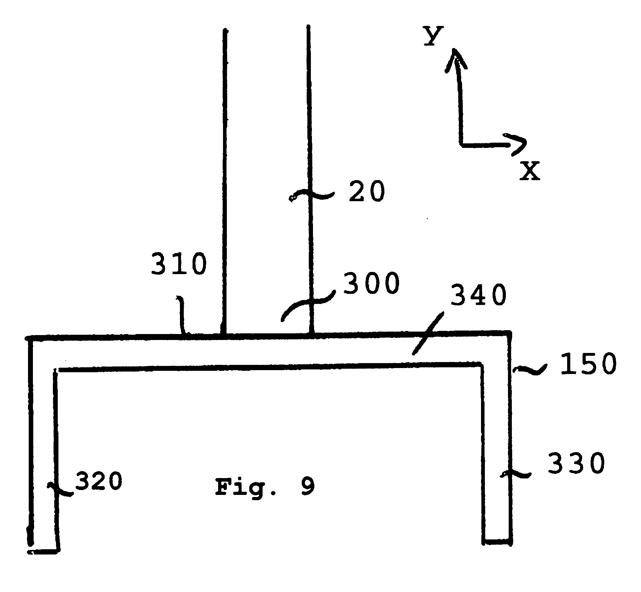

In der Figur 9 sind das Stützelement 20 sowie die Schelle 150 nochmals in einer Seitenansicht im Detail gezeigt. Man erkennt, dass das Stützelement 20 mit seinem Fuß 300 an der Außenseite 310 der Schelle 150 angebracht, beispielsweise angeklebt, angeschraubt oder angeschweißt, ist. Darüber hinaus lässt sich in der Figur 9 erkennen, dass es sich bei der Schelle 150 um ein U-Profil mit zwei Seitenwänden 320 und 330 handelt, die parallel zueinander, zumindest annähernd parallel zueinander angeordnet sind. Die beiden Seitenwände 320 und 330 sind durch ein Verbindungsteil 340 miteinander verbunden, das sich entlang der X-Richtung erstreckt.

In der Figur 10 ist die Schelle 150 in einem Querschnitt gezeigt. Man erkennt die Seitenwand 320 sowie eine in der Seitenwand 320 vorhandene Aussparung 350. Auch die Seitenwand 330 gemäß Figur 9 ist mit einer solchen Aussparung 350 versehen, wobei die beiden Aussparungen der beiden Seitenwände 320 und 330 entlang der X-Richtung miteinander fluchten.

Man erkennt in der Figur 10, dass die Aussparung 350 eine Kontur 360 aufweist, die mit mehreren Stufen 370 versehen ist. Durch die Stufen 370 werden Vorsprünge 380 gebildet, die bei einem Anbringen der Schelle 150 in die Außenwand des Außenrohres 70 eingedrückt werden.

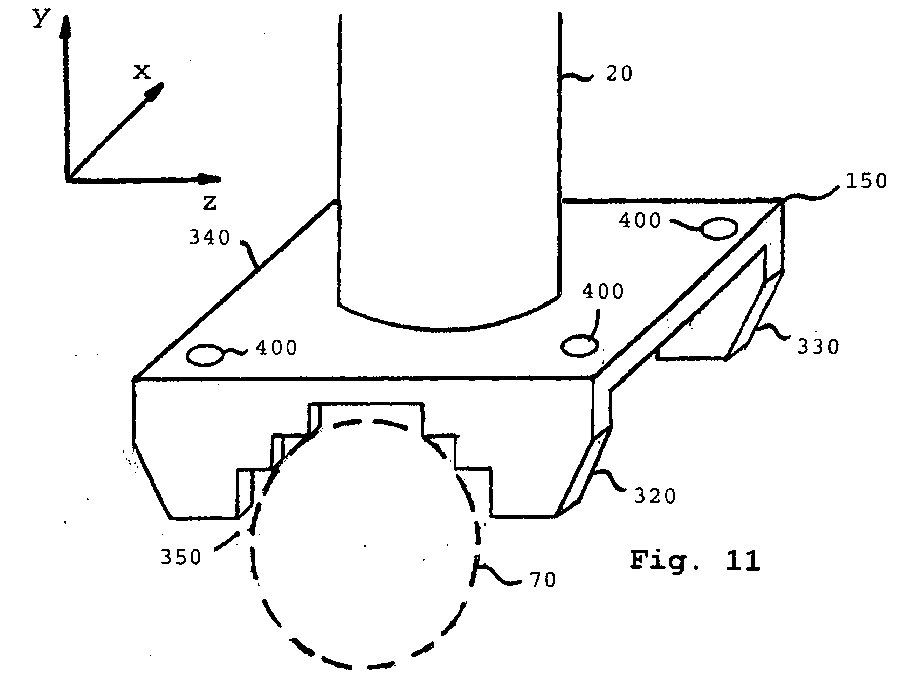

In der Figur 11 ist die Schelle 150 in einer dreidimensionalen Darstellung gezeigt. Man sieht die beiden Seitenwände 320 und 330 sowie die beiden Aussparungen 350 in den beiden Seitenwänden. Darüber hinaus ist das Verbindungsteil 340 gezeigt, das die beiden Seitenwände 320 und 330 beabstandet zueinander hält und miteinander verbindet. Außerdem sieht man das Stützelement 20, das auf dem Verbindungsteil 340 angebracht ist.

Mit einer gestrichelten Linie ist in der Figur 11 das Außenrohr 70 gemäß Figur 7 dargestellt, auf dem die Schelle 150 befestigt wird. Darüber hinaus erkennt man in der Figur 11 Löcher 400, durch die die in der Figur 7 bereits erwähnten Halteelemente 170 und 180 durch das Verbindungsteil 340 hindurchgeführt und mittels der Muttern 200 befestigt werden können.

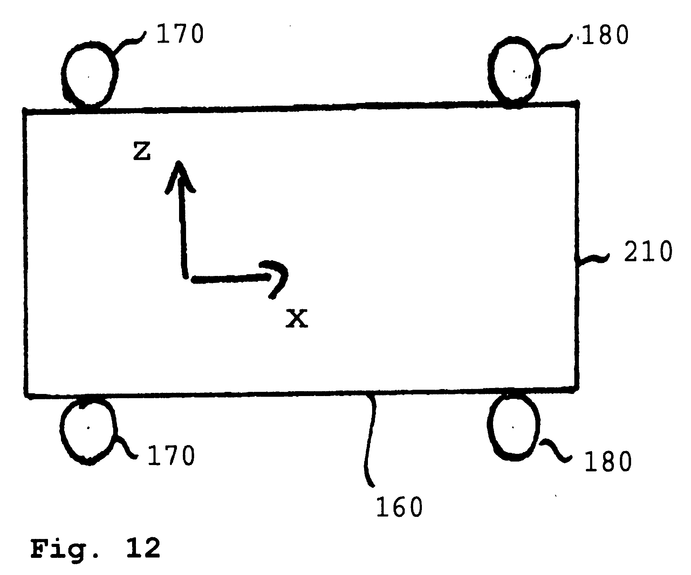

In der Figur 12 ist die Gegenschelle 160 gemäß Figur 7 in einer Sicht von oben gezeigt. Man erkennt das Rinnenteil 210 sowie die beiden Halteelemente 170 und 180, mit denen das Rinnenteil 210 an der Schelle 150 festgeschraubt wird.

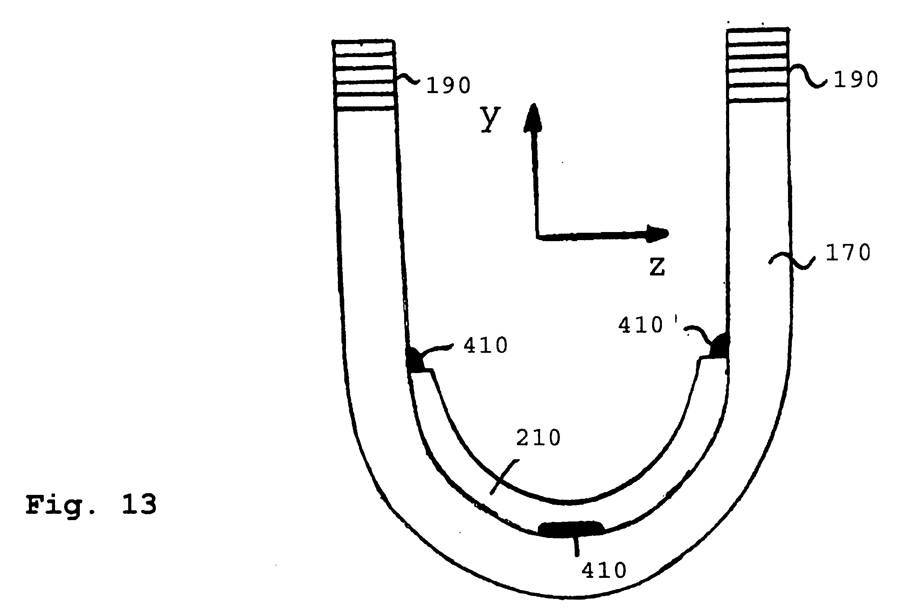

In der Figur 13 ist die Gegenschelle 160 in einem Querschnitt gezeigt. Man erkennt das Rinnenteil 210 sowie eines der beiden Halteelemente 170. Es lässt sich erkennen, dass das Halteelement 170 mit Hilfe von Schweißnähten befestigt ist, von denen in der Figur 13 beispielhaft drei Schweißnähte mit dem Bezugszeichen 410 gekennzeichnet sind.

Darüber hinaus lässt sich in der Figur 13 erkennen, dass die Halteelemente 170 und 180 durch U-förmig gebogene Stangen gebildet sind, die an ihren Enden jeweils mit dem Gewinde 190 versehen sind.

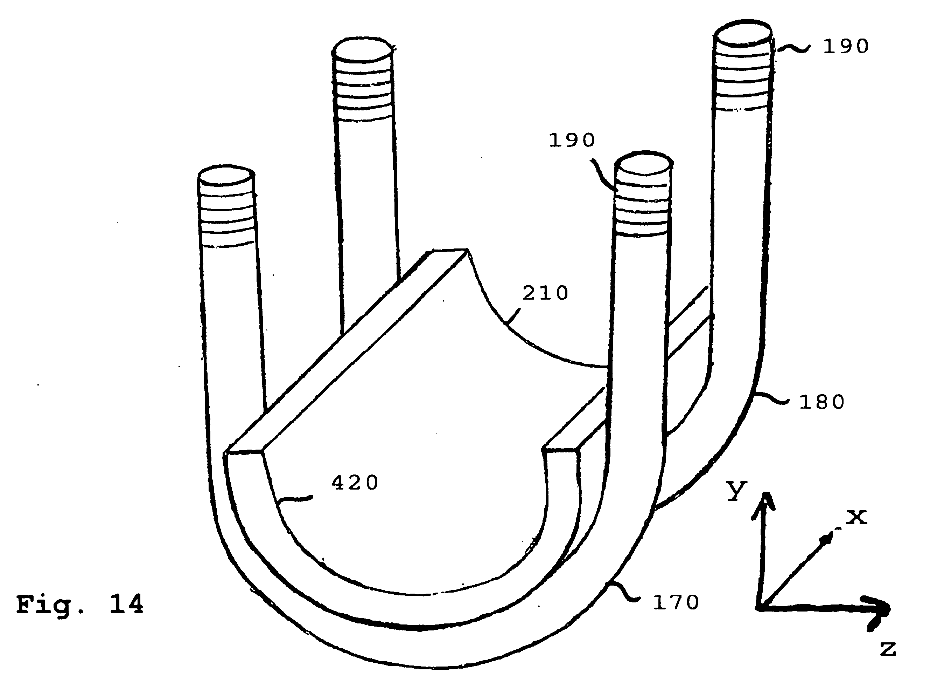

Die Figur 14 zeigt die Gegenschelle 160 nochmals in einer dreidimensionalen Darstellung. Man erkennt das Rinnenteil 210, das derart gewölbt ist, dass seine Innenseite 420 an den Außendurchmesser des Außenrohres 70 angepasst ist, so dass das Rinnenteil 210 nach einer Montage am Außenrohr 70 an diesem passend anliegt.

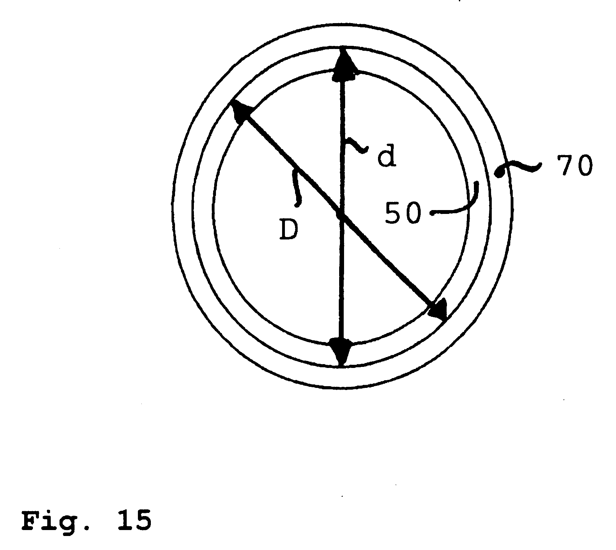

In der Figur 15 sind das Außenrohr 70 sowie das darin befindliche Innenrohr 50 in einem Querschnitt gezeigt. Man erkennt, dass der Außendurchmesser d des Innenrohres 50 dem Innendurchmesser D des Außenrohres 70 sehr gut entspricht, so dass das Innenrohr 50 im Außenrohr 70 klapperfrei und spielfrei verschiebbar ist.

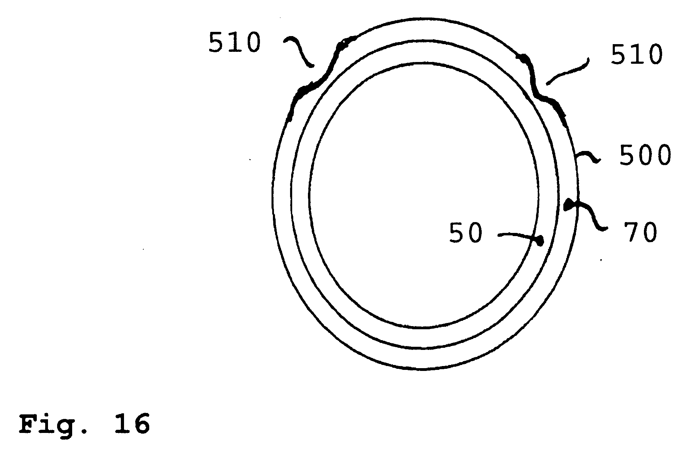

In der Figur 16 ist das Außenrohr 70 gezeigt, nachdem die Schelle 150 sowie die Gegenschelle 160 montiert worden sind. Es lässt sich erkennen, dass das Außenrohr 70 durch die Formgestaltung der Seitenwände 320 und 330 der Schelle 150 verformt wird. Konkret drücken sich die Vorsprünge 380 der Kontur 360 der beiden Seitenwände 320 und 330 (vgl. Figur 10) in die Außenwand 500 des Außenrohres 70 hinein und deformieren das Außenrohr 70 zumindest außenwandseitig unter Bildung von Dellen 510. Auch zu einer innenwandseitigen Deformation des Außenrohres 70 kann es kommen, so dass das Innenrohr 50 im Außenrohr 70 festgeklemmt wird und sich in diesem nicht mehr verschieben kann. Eine Deformation auch des Innenrohres 50 kann dabei auftreten, muss jedoch nicht.

Durch das Festklemmen des Außenrohres 70 auf dem Innenrohr 50 wird die Stabilität des Dachgeneratorträgers 10 deutlich erhöht, weil zusätzlich zu der Fixierung durch die Fixierschraube 110 gemäß Figur 7 nun auch eine weitere Fixierung des Außenrohres 70 mit dem Innenrohr 50 durch die Haltemittel 30 erfolgt. Um zu erreichen, dass die Vorsprünge 380 bzw. die Kontur 360 der Schelle 150 in die Außenwand 500 des Außenrohres 70 beim Festschrauben der Muttern 200 eindringen können, ist das Material der Schelle 150 sowie das Material der Gegenschelle 160 härter als das Material des Außenrohres 70. Vorzugsweise bestehen sowohl das Außenrohr 70 als auch die Schelle 150 und die Gegenschelle 160 aus Stahl; für die Schelle 150 und die Gegenschelle 160 wird jedoch eine härtere Stahlsorte als für das Außenrohr 70 gewählt.

Andere ebenfalls besonders geeignete Materialien für die Schelle 150 und die Gegenschelle 160 sind beispielsweise Edelstahl, Kunststoff, glasfaserverstärkter Kunststoff oder Aluminium. Für das Außenrohr 70 wird vorzugsweise ebenfalls ein Material aus dieser Materialgruppe verwendet, jedoch sollten die Schelle und/oder die Gegenschelle aus einem härteren Material bestehen als das Außenrohr 70, zumindest in dessen Befestigungsabschnitt 220.

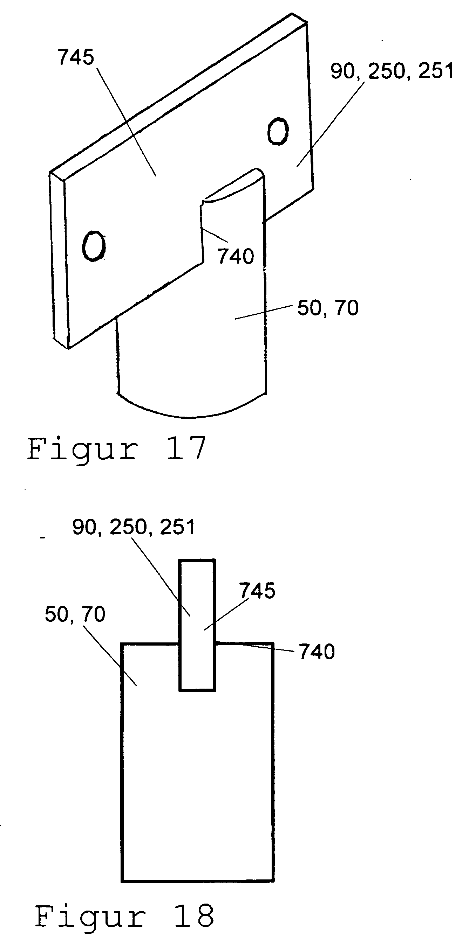

In den Figuren 17 und 18 ist ein weiteres Ausführungsbeispiel für die Verbindung zwischen Montagebasis und Befestigungselement abgebildet. Die Figur 17 zeigt eine dreidimensionale Darstellung von der Seite und die Figur 18 die Verbindung im Querschnitt. Bei diesem Ausführungsbeispiel ist das Innenrohr 50 und/oder das Außenrohr 70 an seinem dem Befestigungselement 90, 250 oder 251 zugeordneten Ende mit einem Schlitz 740 versehen, in den ein plattenförmiger Abschnitt 745 des Befestigungselements 90, 250 oder 251 eingeführt ist. Der plattenförmige Abschnitt 745 des Befestigungselements 90, 250 oder 251 ist mit dem Innenrohr 50 bzw. dem Außenrohr 70 im Schlitz 740 beliebig befestigt, beispielsweise verklebt, verschweißt, verschraubt, vernietet oder verlötet (z. B. hartgelötet).

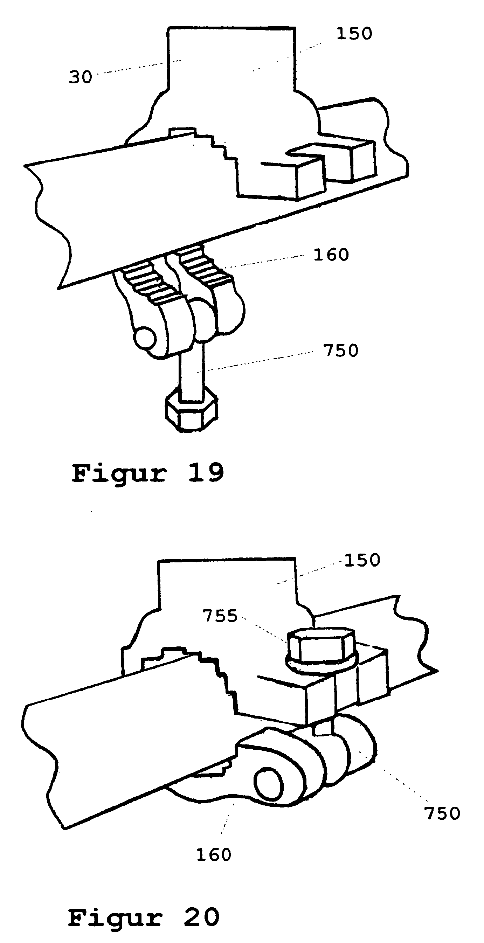

In den Figuren 19 und 20 ist ein weiteres Ausführungsbeispiel für Haltemittel 30 bzw. für eine Klemmverbindung mittels Klemmelement 150 und Gegenklemmelement 160 gezeigt. Das Klemmelement 150 und das Gegenklemmelement 160 sind an einer Seite durch ein in der Figur verdecktes Schwenklager oder Schwenkgelenk miteinander verbunden und werden nur auf einer anderen Seite, zum Beispiel der gegenüberliegenden Seite, durch eine Schraube 750, z. B. Augenschraube, und ein Gegenstück 755 mit Innengewinde, zum Beispiel eine Mutter, miteinander verbunden.

### Bezugszeichenliste

- 10: Dachgeneratorträger
- 11: Trägerelement
- 20: Stützelement
- 21: Stützelementpaar
- 30: Haltemittel
- 40: Montagebasis
- 45: Montagebasenpaar
- 50: Innenrohr
- 60: rechtes Ende
- 70: Außenrohr
- 80: linkes Ende
- 90: Befestigungselement
- 100: Löcher
- 110: Fixierschraube
- 120: Gewinde
- 150: Schelle
- 160: Gegenschelle
- 170: Halteelement
- 180: Halteelement
- 190: Gewinde
- 200: Mutter
- 210: Rinnenteil
- 220: Abschnitt
- 250: weiteres Befestigungselement
- 251: Verbindungsteil

- 300: Fuß
- 310: Außenseite
- 320: Seitenwand
- 330: Seitenwand
- 340: Verbindungsteil
- 350: Aussparung
- 360: Kontur
- 370: Stufen
- 380: Vorsprünge
- 400: Löcher
- 410: Schweißnähte
- 420: Innenseite
- 500: Außenwand
- 510: Dellen
- 700: Spitzdach
- 701: Dachfirst
- 702: eine Dachseite
- 704: Dachseite
- 710: Dachsparren
- 720: Dachlatten
- 720a: untere Dachlatte
- 720b: obere Dachlatte
- 730: Zwischenbereich
- 740: Schlitz
- 745: plattenförmiger Abschnitt
- 750: Schraube
- 755: Gegenstück

- x,y,z: Raumkoordinaten
- d: Außendurchmesser des Innenrohrs
- D: Innendurchmesser des Außenrohres
- L1: kürzerer Befestigungsabschnitt
- L2: längerer Befestigungsabschnitt
- P: Befestigungsstelle
- A1, A2: Abstände
- V: Versatz

## Patentansprüche

1. Dachgeneratorträger (10) für einen Windgenerator, mit einem Trägerelement (11) zum Tragen des Windgenerators und zumindest zwei Stützelementen (20a-20d), die jeweils mit ihrem einen Ende an dem Trägerelement (11) und mit ihrem anderen Ende mittelbar oder unmittelbar am Dach (700) befestigbar sind,
wobei der Dachgeneratorträger zumindest eine Montagebasis (40) aufweist, **dadurch gekennzeichnet, daß** die Montagebasis (40)
wenigstens zwei ineinandergreifende Rundrohre (50, 70) oder ein Rundrohr und eine in das Rundrohr eingreifende Stange umfasst, sowie Befestigungselemente (90, 250, 251) aufweist, mittels derer sie auf zwei benachbarten Dachsparren (710) oder Dachlatten (720) des Daches befestigbar ist,
- zumindest eines der Stützelemente mittels einer solchen Montagebasis mittelbar am Dach befestigbar ist und
- an dem anderen Ende des zumindest einen Stützelements ein Klemmelement (150) angebracht ist, das mit einem Gegenklemmelement (160) an einem der Rundrohre (50, 70) oder an der Stange der Montagebasis festklemmbar ist, und zwar derart, dass das Klemmelement und das Gegenklemmelement einen Abschnitt der Montagebasis mittelbar oder unmittelbar zwischen ihren Klemmelementinnenseiten einklemmen, wobei das Stützelement an einer Klemmelementaußenseite angebracht ist.

2. Dachgeneratorträger nach Anspruch 1, **dadurch gekennzeichnet, dass** eine formschlüssige Verbindung zwischen dem Klemmelement und dem Rundrohr bzw. der Stange und/oder eine formschlüssige Verbindung zwischen dem Gegenklemmelement und dem Rundrohr bzw. der Stange auf einer entsprechenden Formgebung des Klemmelements oder des Gegenklemmelements beruht, die bereits vor der Montage an der Montagebasis vorhanden ist oder auf einer Deformation beruht, die erst bei der bestimmungsgemäßen Montage durch eine Deformation des Klemmelements, des Gegenklemmelements, des Rundrohres und/oder der Stange hervorgerufen wird.

3. Dachgeneratorträger nach einem der voranstehenden Ansprüche, **dadurch gekennzeichnet, dass** der Innendurchmesser des äußeren Rundrohres der Montagebasis und der Außendurchmesser des inneren Rundrohres bzw. der Stange der Montagebasis derart aufeinander abgestimmt sind, dass das innere Rundrohr bzw. die Stange im äußeren Rundrohr spielfrei, zumindest weitgehend spielfrei, beweglich ist und dass durch ein Verformen des äußeren Rundrohres das innere Rundrohr bzw. die Stange und das äußere Rundrohr derart miteinander verklemmt werden, dass sie relativ zueinander fixiert werden.

4. Dachgeneratorträger nach einem der voranstehenden Ansprüche, **dadurch gekennzeichnet, dass** jedes der Stützelemente des Dachgeneratorträgers an seinem anderen Ende mit einem Klemmelement versehen ist und mit diesem mittels einer Montagebasis mittelbar am Dach befestigbar ist.

5. Dachgeneratorträger nach einem der voranstehenden Ansprüche, **dadurch gekennzeichnet, dass** zumindest eines der Stützelemente stufenlos längenverstellbar sind und wenigstens zwei ineinandergreifende Stützrohre oder ein Stützrohr und eine in das Stützrohr eingreifende Stützstange umfasst.

6. Dachgeneratorträger nach einem der voranstehenden Ansprüche, **dadurch gekennzeichnet, dass** das Trägerelement einen Rahmen aufweist, der stufenlos größenverstellbar ist und wenigstens zwei ineinandergreifende Rahmenrohre oder ein Rahmenrohr und eine in das Rahmenrohr eingreifende Rahmenstange umfasst.

7. Dachgeneratorträger nach einem der voranstehenden Ansprüche, **dadurch gekennzeichnet, dass** zumindest zwei Montagebasen durch jeweils ein Verbindungsteil (251) unter Bildung eines oder mehrerer Montagebasenpaare derart miteinander verbunden sind, dass das bzw. die Montagebasenpaare an und/oder auf drei oder mehr unmittelbar nebeneinander angeordneten Dachlatten oder Dachsparren anbringbar sind.

8. Dachgeneratorträger nach einem der voranstehenden Ansprüche, **dadurch gekennzeichnet, dass** der Dachgeneratorträger zur Montage des Generators auf einer einzigen Dachseite (702) geeignet ist, wobei zumindest zwei Stützelemente unterschiedlich lang sind oder unterschiedlich lang einstellbar sind und das kürzere Stützelement zur Dachmontage räumlich oberhalb des längeren Stützelements geeignet ist.

9. Dachgeneratorträger nach einem der voranstehenden Ansprüche, **dadurch gekennzeichnet, dass** die Befestigungsstelle (P) der Montagebasis (40) an jedem der Befestigungselemente - bezogen auf den Mittelpunkt (M) des jeweiligen Befestigungselements in Richtung der Längsachse (L) gesehen - um zumindest 10 % der Länge (Lg) des Befestigungselementes (90, 250) in Längsrichtung (L) versetzt ist.

10. Dachgeneratorträger nach einem der voranstehenden Ansprüche, **dadurch gekennzeichnet, dass** zumindest ein Befestigungselement an der zugehörigen Montagebasis befestigt ist, indem es mit einem plattenförmigen Abschnitt (745) in einen Schlitz (740) am Ende eines Rundrohres der Montagebasis eingeschoben und darin fixiert ist.

11. Anordnung mit einem Windgenerator und einem Dachgeneratorträger nach einem der voranstehenden Ansprüche.

## Claims

1. Roof generator support (10) for a wind generator, having a support element (11), for supporting the wind generator, and at least two supporting elements (20a-20d) which can each be fastened by way of one of their ends to the support element (11) and by way of their other end indirectly or directly to the roof (700), with the roof generator support having at least one mounting base (40), **characterized in that** the mounting base (40) comprises at least two interengaging round tubes (50, 70) or one round tube and one rod which engages in the round tube, and also fastening elements (90, 250, 251) by means of which the said mounting base can be fastened on two adjacent rafters (710) or roof battens (720) of the roof,
- at least one of the supporting elements can be fastened indirectly to the roof by means of a mounting base of this kind, and
- a clamping element (150) is fitted to the other end of the at least one supporting element, it being possible for the said clamping element to be fixedly clamped to a mating clamping element (160) on one of the round tubes (50, 70) or on the rod of the mounting base, specifically in such a way that the clamping element and the mating clamping element clamp in a portion of the mounting base indirectly or directly between their clamping element inner faces, with the supporting element being fitted to a clamping element outer face.

2. Roof generator support according to Claim 1, **characterized in that** an interlocking connection between the clamping element and the round tube or the rod and/or an interlocking connection between the mating clamping element and the round tube or the rod is based on a corresponding shaping of the clamping element or of the mating clamping element, which shaping is already present before mounting on the mounting base, or is based on a deformation which is induced by deformation of the clamping element, the mating clamping element, the round tube and/or the rod only in the event of mounting in the intended manner.

3. Roof generator support according to either of the preceding claims, **characterized in that** the inside diameter of the outer round tube of the mounting base and the outside diameter of the inner round tube or the rod of the mounting base are matched to one another in such a way that the inner round tube or the rod can move in the outer round tube without play, at least largely without play, and **in that**, as a result of deformation of the outer round tube, the inner round tube or the rod and the outer round tube are locked to one another in such a way that they are fixed relative to one another.

4. Roof generator support according to one of the preceding claims, **characterized in that** each of the supporting elements of the roof generator support is provided with a clamping element at its other end and can be fastened indirectly to the roof by means of a mounting base by this clamping element.

5. Roof generator support according to one of the preceding claims, **characterized in that** at least one of the supporting elements is infinitely vertically adjustable and comprises at least two interengaging supporting tubes or one supporting tube and one supporting rod which engages in the supporting tube.

6. Roof generator support according to one of the preceding claims, **characterized in that** the support element has a frame which is infinitely variable in size and comprises at least two interengaging frame tubes or one frame tube and one frame rod which engages in the frame tube.

7. Roof generator support according to one of the preceding claims, **characterized in that** at least two mounting bases are connected to one another by in each case one connecting part (251), so as to form one or more pairs of mounting bases, in such a way that the pair or pairs of mounting bases can be fitted to and/or on three or more roof battens or rafters which are arranged directly next to one another.

8. Roof generator support according to one of the preceding claims, **characterized in that** the roof generator support is suitable for mounting the generator on a single side (702) of the roof, with at least two supporting elements being of different lengths or it being possible to adjust at least two supporting elements to different lengths, and the shorter supporting element being suitable for being mounted on the roof physically above the longer supporting element.

9. Roof generator support according to one of the preceding claims, **characterized in that** the fastening point (P) of the mounting base (40) on each of the fastening elements is offset by at least 10% of the length (Lg) of the fastening element (90, 250) in the longitudinal direction (L) - as seen with respect to the centre point (M) of the respective fastening element in the direction of the longitudinal axis (L).

10. Roof generator support according to one of the preceding claims, **characterized in that** at least one fastening element is fastened to the associated mounting base by being inserted into a slot (740) at the end of a round pipe of the mounting base by way of a plate-like portion (745) and being fixed therein.

11. Arrangement having a wind generator and a roof generator support according to one of the preceding claims.

## Revendications

1. Support de générateur de toit (10) pour une éolienne, comprenant un élément de support (11) pour supporter l'éolienne et au moins deux éléments d'appui (20a-20d) qui peuvent être fixés à chaque fois par l'intermédiaire de l'une de leurs extrémités à l'élément de support (11), et par l'intermédiaire de leur autre extrémité au toit (700), directement ou indirectement, le support de générateur de toit comprenant au moins une base de montage (40), **caractérisé en ce que** la base de montage (40) comporte au moins deux tubes ronds (50, 70) venant en prise l'un dans l'autre, ou un tube rond et une tige venant en prise dans le tube rond, ainsi que des éléments de fixation (90, 250, 251) au moyen desquels elle peut être fixée à deux chevrons (710) ou lattes (720) adjacent(e)s du toit,
- au moins l'un des éléments d'appui peut être fixé indirectement au toit au moyen d'une telle base de montage et
- un élément de serrage (150) est monté sur l'autre extrémité de l'au moins un élément d'appui, lequel élément de serrage pouvant être serré fixement sur l'un des tubes ronds (50, 70) ou sur la tige de la base de montage par l'intermédiaire d'un élément de contre-serrage (160), à savoir de telle sorte que l'élément de serrage et l'élément de contre-serrage serrent une section de la base de montage directement ou indirectement entre leurs côtés intérieurs d'élément de serrage, l'élément d'appui étant monté sur un côté extérieur de l'élément de serrage.

2. Support de générateur de toit selon la revendication 1, **caractérisé en ce qu'**une liaison par coopération de formes entre l'élément de serrage et le tube rond ou la tige et/ou une liaison par coopération de formes entre l'élément de contre-serrage et le tube rond ou la tige reposent sur un façonnage correspondant de l'élément de serrage ou de l'élément de contre-serrage qui existe déjà avant le montage sur la base de montage, ou reposent sur une déformation qui est produite seulement lors du montage conforme aux prescriptions par une déformation de l'élément de serrage, de l'élément de contre-serrage, du tube rond et/ou de la tige.

3. Support de générateur de toit selon l'une quelconque des revendications précédentes, **caractérisé en ce que** le diamètre intérieur du tube rond extérieur de la base de montage et le diamètre extérieur du tube rond intérieur ou de la tige de la base de montage sont adaptés l'un à l'autre de telle sorte que le tube rond intérieur ou la tige soit mobile sans jeu, au moins dans une large mesure sans jeu, dans le tube rond extérieur, et **en ce que**, par une déformation du tube rond extérieur, le tube rond intérieur ou la tige et le tube rond extérieur sont bloqués ensemble de telle sorte qu'ils soient fixés relativement l'un par rapport à l'autre.

4. Support de générateur de toit selon l'une quelconque des revendications précédentes, **caractérisé en ce que** chacun des éléments d'appui du support de générateur de toit est pourvu d'un élément de serrage au niveau de son autre extrémité, et peut être fixé, par l'intermédiaire de cet élément de serrage, indirectement au toit au moyen d'une base de montage.

5. Support de générateur de toit selon l'une quelconque des revendications précédentes, **caractérisé en ce qu'**au moins l'un des éléments d'appui peut être réglé en longueur en continu, et comporte au moins deux tubes d'appui venant en prise l'un dans l'autre ou un tube d'appui et une tige d'appui venant en prise dans le tube d'appui.

6. Support de générateur de toit selon l'une quelconque des revendications précédentes, **caractérisé en ce que** l'élément de support comporte un cadre dont les dimensions peuvent être réglées en continu, et comporte au moins deux tubes de cadre venant en prise l'un dans l'autre ou un tube de cadre et une tige de cadre venant en prise dans le tube de cadre.

7. Support de générateur de toit selon l'une quelconque des revendications précédentes, **caractérisé en ce qu'**au moins deux bases de montage sont reliées l'une à l'autre, à chaque fois par une pièce de liaison (251) en formant une ou plusieurs paires de bases de montage, de telle sorte que la ou les paires de bases de montage puissent être montées contre et/ou sur trois ou plus de trois lattes de toit ou chevrons de toit disposé(e)s directement à côté les un(e)s des autres.

8. Support de générateur de toit selon l'une quelconque des revendications précédentes, **caractérisé en ce que** le support de générateur de toit est approprié pour le montage du générateur sur un seul côté du toit (702), au moins deux éléments d'appui étant de longueurs différentes ou pouvant être ajustés de manière à être de longueurs différentes et l'élément d'appui plus court étant approprié pour le montage sur le toit spatialement au-dessus de l'élément d'appui plus long.

9. Support de générateur de toit selon l'une quelconque des revendications précédentes, **caractérisé en ce que** les points de fixation (P) de la base de montage (40), au niveau de chacun des éléments de fixation, sont décalés dans la direction longitudinale (L) d'au moins 10 % de la longueur (Lg) de l'élément de fixation (90, 250) - par rapport au centre (M) de l'élément de fixation respectif vu dans la direction de l'axe longitudinal (L).

10. Support de générateur de toit selon l'une quelconque des revendications précédentes, **caractérisé en ce qu'**au moins un élément de fixation est fixé à la base de montage associée, par le fait qu'il est inséré et fixé, par l'intermédiaire d'une section (745) en forme de plaque, dans une fente (740) à l'extrémité d'un tube rond de la base de montage.

11. Agencement comprenant une éolienne et un support de générateur de toit selon l'une quelconque des revendications précédentes.
